# EUROPEAN PATENT APPLICATION

(11) **EP 2 179 884 A1**
(43) Date of publication of application: **28.04.2010**
(21) Application number: 09173370.9
(22) Date of filing: 19.10.2009
(51) Int. Cl.: B60N 2/28

(54) **Security infant seat for automobiles**

(30) Priority: 23.10.2008 ES 200802166 U
(71) Applicant: Play, S.A., 08184 Palau-Solità I Plegamans (ES)
(72) Inventor: Jane Stopp, Joaquin, 08184 Palau de Plegamans (ES)
(74) Representative: Ponti Sales, Adelaida

(57) **Abstract**

The security infant seat (1) comprises a seat belt of the seat itself, which in the front part defines two straps (2a, 2b) to hold the seat user in its use position, and it is **characterised in that** each of said straps (2a, 2b) comprises an elastic element, which in a rest position moves the corresponding strap (2a, 2b), moving it outwardly from the seat. Each elastic element is preferably associated with a guide element (5a, 5b) of each strap (2a, 2b) of the seat belt, each guide element (5a, 5b) being rotatable about a rotation axis (6a, 6b) between an open position and a use position, against the action of the corresponding elastic element.

It makes easier for the child to get in and out from the seat, and it also makes the placement of the seat belt easier once the child in seated in the seat.

## Description

The present invention refers to a security infant seat for automobiles, which comprises a seat belt of the security infant seat itself.

### BACKGROUND OF THE INVENTION

Currently, in the automobiles the children must be seated in security seats specially designed according to their weight.

Specifically, the seats are divided in groups from 0 to 3 according to the weight of the child that uses them.

In the seats of group 1, for children with a weight from 9 kg to 18 kg, the seat itself includes a seat belt, independent from the automobile seat belt. The seat belt of the seat defines two straps that are fixed to each other by a buckle and with a lower strip that passes between the legs of the child. In the use position, these straps are used to hold the child, passing on the shoulders of the child.

In the security infant seat currently known, the aperture of these straps to access the seat or for getting out of the seat is completely manual. In use, it has been demonstrated that normally the child, before being tied with the seat belt, seats on said straps, and it is uncomfortable to place manually the straps in their use position when the child is already seated.

Furthermore, another drawback of these known seats is that the seat belt straps can be folded about themselves, being helicoidally coiled, which is uncomfortable for the child who uses the seat, so they must be uncoiled manually before each use of the infant security seat.

### SUMMARY OF THE INVENTION

With the seat of the invention said drawbacks can be solved, presenting other advantages that will be described.

The security infant seat for automobiles of the present invention comprises a seat belt of the seat itself, which in the front part defines two straps to hold the seat user in its use position, and it is **characterised in that** each of said straps comprises an elastic element, which in a rest position moves the corresponding strap, moving it outwardly from the seat.

Thanks to this feature, it is easier for the child to get in and out from the seat, by his/her own means or with the help of an adult. It also makes the placement of the seat belt easier once the child in seated in the seat.

According to a preferred embodiment, each elastic element is associated with a guide element of each strap of the seat belt, each guide element being rotatable about a rotation axis between an open position and a use position, against the action of the corresponding elastic element. This guide element also permits the straps to be in their open position when the seat of the present invention is not used.

Advantageously, each elastic element is placed around each rotation axis of the rotatable guide element, the elastic elements being preferably helical springs.

### BRIEF DESCRIPTION OF THE DRAWINGS

For a better understanding of what has been explained some drawings are attached in which, diagrammatically and only as a non-limitative example, a practical case of embodiment is shown.

Fig. 1 is a perspective view of the central part of the infant seat of the present invention, with the seat belt in the use position; and

Fig. 2 is a perspective view of the central part of the infant seat of the present invention, with the seat belt in the open position.

### DESCRIPTION OF A PREFERRED EMBODIMENT

As it can be seen in the figures, the security infant seat, designed generally by numeral reference 1, comprises a seat belt of the seat 1 itself, independent from the seat belt of the automobile where the security seat of the present invention is placed.

This seat belt of the seat defines two straps 2a, 2b and a lower strip 3. A buckle 4 fixes these straps 2a, 2b and the lower strip 3 to each other. In its use position, the straps 2a, 2b are placed on the child's chest, and the lower strip 3 is placed between the child's legs.

According to the invention, each strap 2a, 2b comprises an associated guide element 5a, 5b. Each guide element 5a, 5b is rotatably fixed to the seat 1 about a rotating axis 6a, 6b, and its opposed end from the rotation axis 6a, 6b is provided with a groove 7a, 7b for the passage of the straps 2a, 2b of the seat belt.

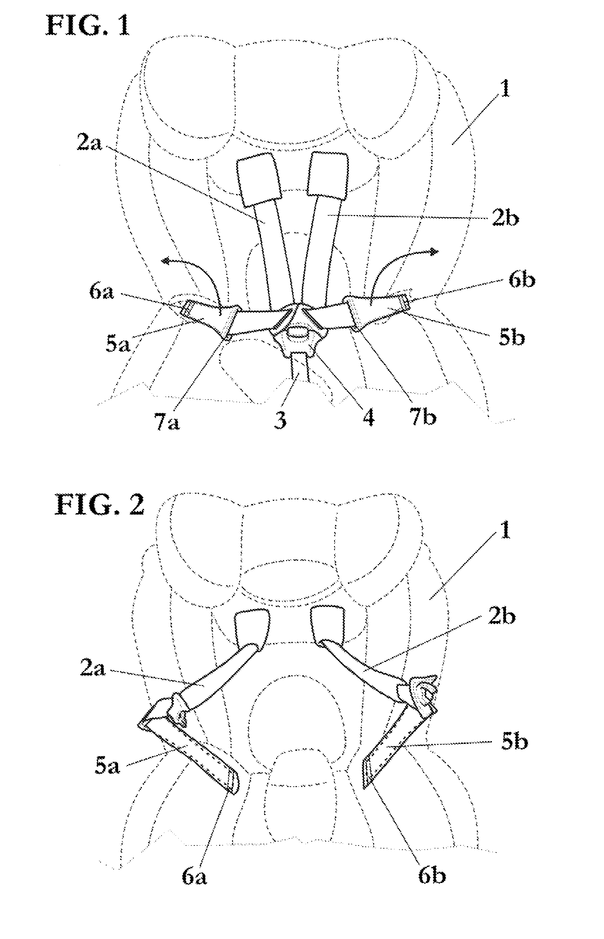

Each rotation axis 6a, 6b has an associated helical spring (not shown for simplicity reasons) placed around the rotation axis 6a, 6b, to promote the swinging movement shown by the arrows in Fig. 1, i.e. moving the straps 2a, 2b outwardly from the seat 1.

It must be pointed out that the guide elements could be associated with any elastic element suitable different from a helical spring, e.g. they could be associated to an elastic band or the like.

Therefore, when the seat of the present invention is not used, the straps 2a, 2b of the seat belt are in the rest or open position, shown in Fig. 2, automatically. Hence, when the child seats on the seat 1, he/she will not seat on the straps 2a, 2b, facilitating their placement.

To place the straps 2a, 2b in their use position, they must be pulled to the centre of the seat 1, against the action of the helical springs, remaining at the use position when the buckle 4 fixes them. As it is apparent, when the buckle 4 is released, the straps 2a, 2b will return automatically to their open position, permitting the child to get out of the infant seat of the present invention more comfortably.

Even though reference is made to a specific embodiment of the invention, it is apparent for a person skilled in the art that the disclosed infant seat is susceptible of numerous variations and modifications, and that all the details cited can be substituted by other technically equivalent ones, without departing from the scope of protection defined by the attached claims.

## Claims

1. Security infant seat for automobiles (1), comprising a seat belt of the seat itself, which in the front part defines two straps (2a, 2b) to hold the seat user in its use position, **characterised in that** each of said straps (2a, 2b) comprises an elastic element, which in a rest position moves the corresponding strap (2a, 2b), moving it outwardly from the seat.

2. Infant seat according to claim 1, wherein each elastic element is associated with a guide element (5a, 5b) of each strap (2a, 2b) of the seat belt, each guide element (5a, 5b) being rotatable about a rotation axis (6a, 6b) between an open position and a use position, against the action of the corresponding elastic element.

3. Infant seat according to claim 2, wherein each elastic element is placed around each rotation axis (6a, 6b) of the rotatable guide element (5a, 5b).

4. Infant seat according to anyone of the previous claims, wherein said elastic elements are helical springs.
